# EUROPEAN PATENT APPLICATION

(11) **EP 4 131 598 A1**
(43) Date of publication of application: **08.02.2023**
(21) Application number: 20928585.7
(22) Date of filing: 25.11.2020
(51) Int. Cl.: H01M 50/20, B60K 1/04, B60L 50/60, B60L 53/14, H01M 10/613, H01M 10/625, H01M 10/647, H01M 10/658

(54) **POWER SUPPLY DEVICE, AND ELECTRIC VEHICLE AND POWER STORAGE DEVICE EQUIPPED WITH THIS POWER SUPPLY DEVICE**

(30) Priority: 31.03.2020 JP 2020063975
(71) Applicant: SANYO Electric Co., Ltd., Daito-shi Osaka 574-8534 (JP)
(72) Inventor: KOGAMI, Nao, Chuo-ku, Osaka-shi, Osaka 540-6207 (JP); HARAZUKA, Kazuhiro, Chuo-ku, Osaka-shi, Osaka 540-6207 (JP); FUJINAGA, Koji, Chuo-ku, Osaka-shi, Osaka 540-6207 (JP)
(74) Representative: Novagraaf International SA
(86) International application number: PCT/JP2020/043709
(87) International publication number: WO 2021/199492

(57) **Abstract**

A power supply device includes: battery block (10) formed by stacking a plurality of battery cells (1) in a thickness with separator (2) interposed therebetween; a pair of end plates (3) disposed on both end surfaces of battery block (10); and binding bar (4) connected to the pair of end plates (3) and configured to fix battery block (10) in a pressurized state via end plates (3). Separator (2) includes an elastic plate (5) made of a plastic foam including open cells on a surface of the separator or as a whole.

## Description

### TECHNICAL FIELD

The present invention relates to a power supply device in which a large number of battery cells are stacked, and an electric vehicle and a power storage device equipped with the power supply device.

### BACKGROUND ART

A power supply device in which a large number of battery cells are stacked is suitable as a power source that is mounted on an electric vehicle and supplies electric power to a motor that drives the vehicle, a power source that is charged with a natural energy such as a solar battery or midnight electric power, and a backup power source in the event of a power failure. In the power supply device having this structure, a separator is sandwiched between the stacked battery cells. The power supply device in which a large number of battery cells are stacked with a separator interposed therebetween fixes the stacked battery cells in a pressurized state in order to prevent positional displacement due to expansion of the battery cells. In order to realize this, in the power supply device, a pair of end plates are disposed on both end surfaces of a battery block in which a large number of battery cells are stacked, and the pair of end plates are connected by binding bars. (See PTL 1)

### Citation List

### Patent Literature

PTL 1: Unexamined Japanese Patent Publication No. 2018-204708

### SUMMARY OF THE INVENTION

### Technical problem

In the power supply device, the plurality of battery cells are stacked to form the battery block, the pair of end plates are disposed on both end surfaces of the battery block, and the battery block is held in a pressurized state by a considerably strong pressure from both end surfaces and the pair of end plates are connected by the binding bars. In the power supply device, the battery cells are fixed in a strongly pressurized state to prevent malfunction due to relative movement or vibration of the battery cells. When the power supply device uses, for example, a battery cell with a stacked surface having an area of about 100 cm², the end plates are pressed with a strong force of several tons and fixed with the binding bars. In the power supply device having this structure, a hard plastic plate is used as the separator in order to insulate the adjacently stacked battery cells with the separator. The separator made of hard plastic cannot absorb expansion of the battery cells when the battery cells increase in internal pressure and expand. In this state, a surface pressure between each of the battery cells and the separator rapidly increases, so that an extremely strong force acts on the end plates and the binding bars. For this reason, the end plates and the binding bar are required to have a very strong material and shape, and there is an adverse effect that the power supply device becomes heavy and large, and the material cost increases. Further, in a battery cell that does not uniformly expand as a whole but ununiformly expands, a surface pressure distribution becomes ununiform, which adversely affects an electrode or the like.

The present invention has been developed to solve the above disadvantages, and an object of the present invention is to provide a technique capable of naturally absorbing expansion of battery cells with a separator, and further absorbing the expansion while equalizing a surface pressure distribution of the battery cells.

### Solution to problem

A power supply device according to an aspect of the present invention includes: a battery block formed by stacking a plurality of battery cells in a thickness with a separator interposed therebetween; a pair of end plates disposed on both end surfaces of the battery block; and a binding bar connected to the pair of end plates and configured to fix the battery block in a pressurized state via the end plates. The separator includes an elastic plate made of a plastic foam including open cells on a surface of the separator or as a whole.

An electric vehicle according to an aspect of the present invention includes: the above-described the power supply device; a motor for traveling to which electric power is supplied from the power supply device; a vehicle body on which the power supply device and the motor are mounted; and wheels driven by the motor to cause the vehicle body to travel.

A power storage device according to an aspect of the present invention includes: the above-described power supply device; and a power supply controller that controls charging and discharging to the power supply device, wherein the power supply controller enables charging to the battery cells by electric power from an outside, and performs control to charge the battery cells.

### Advantageous effect of invention

In the power supply device described above, the expansion of the battery cells can be naturally absorbed by the separator, and further, the expansion can be absorbed while the surface pressure distribution of the battery cells is equalized.

### BRIEF DESCRIPTION OF THE DRAWINGS

Fig. 1 is a perspective view of a power supply device according to an exemplary embodiment of the present invention.
Fig. 2 is a vertical cross-sectional view of the power supply device illustrated in Fig. 1.
Fig. 3 is a horizontal cross-sectional view of the power supply device illustrated in Fig. 1.
Fig. 4 is a partially enlarged schematic cross-sectional view illustrating a stacked state of a battery cell and a separator.
Fig. 5 is a schematic cross-sectional view illustrating a state in which the battery cell of Fig. 4 is expanded.
Fig. 6 is a partially enlarged schematic cross-sectional view illustrating another example of the separator.
Fig. 7 is a partially enlarged schematic cross-sectional view illustrating another example of the separator.
Fig. 8 is a block diagram illustrating an example in which a power supply device is mounted on a hybrid vehicle that travels by an engine and a motor.
Fig. 9 is a block diagram illustrating an example in which a power supply device is mounted on an electric automobile that travels only by a motor.
Fig. 10 is a block diagram illustrating an example of application to a power supply device for power storage.

### DESCRIPTION OF EMBODIMENT

Hereinafter, the present invention will be described in detail with reference to the drawings. Note that, in the following description, terms (e.g., "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Further, parts denoted by the same reference marks in a plurality of drawings indicate the same or equivalent parts or members.

Furthermore, exemplary embodiments to be described below show a specific example of the technical idea of the present invention, and the present invention is not limited to the exemplary embodiments below. Further, unless otherwise specified, dimensions, materials, shapes, relative dispositions, and the like of the configuration components described below are not intended to limit the scope of the present invention only to them, but are intended to be illustrative. Furthermore, the contents described in one exemplary embodiment or example are also applicable to other exemplary embodiments and examples. Additionally, sizes, positional relationships, and the like of members illustrated in the drawings may be exaggerated for clarity of description.

A power supply device according to a first exemplary embodiment of the present invention includes a battery block formed by stacking a plurality of battery cells in a thickness with a separator interposed therebetween, a pair of end plates disposed on both end surfaces of the battery block, and a binding bar connected to the pair of end plates and configured to fix the battery block in a pressurized state via the end plates. The separator includes an elastic plate made of a plastic foam including open cells on a surface of the separator or as a whole.

In the power supply device described above, since the separator is an elastically deformable elastic separator made of an open-cell plastic foam, the elastic plate absorbs expansion of the battery cells. Therefore, it is possible to suppress an increase in surface pressure between each of the battery cells and the separator in a state where the internal pressure of the battery cell increases and expands. In this power supply device, since the elastic plate of the separator is made of an open-cell plastic foam, it is possible to equalize the surface pressure distribution on a surface of the battery cell and to prevent an adverse effect that the pressure locally increases. This is because, in the open-cell plastic foam, air in pressed and crushed cells flows to surroundings through the open cells and is easily deformed.

Since an elastic plate of a closed-cell plastic foam is also elastically deformed, the elastic plate can be used as a separator that absorbs expansion of the battery cells. However, in the separator made of the elastic plate, since cells are independent, when the cells or bubbles are pressed by the battery cells and crushed, an internal pressure of the cells or bubbles increases to inhibit elastic deformation. Therefore, the separator of the closed-cell plastic foam cannot uniformly absorb local expansion of the battery cells, and the surface pressure distribution on the surface of the battery cells becomes ununiform, which adversely affects an electrode layer built in a battery. In the power supply device described above, the elastic plate of the plastic foam having open cells is used as a separator, so that the above adverse effects can be eliminated and the surface pressure distribution of the battery cells can be equalized.

Furthermore, in the power supply device described above, since the elastic plate of the separator suppresses an increase in surface pressure due to expansion of the battery cells, it is possible to prevent the battery cells from expanding and an excessive stress from acting on the end plates and the binding bar. The end plates and the binding bar that can reduce the maximum stress can be made thin and lightweight. Further, in the power supply device in which the separator between the battery cells absorbs the expansion of the battery cells, it is possible to prevent a relative position from being shifted due to the expansion of the battery cells. This can also prevent adverse effects of an electrical connection part of the battery cell. This is because, although the stacked battery cells are electrically connected by fixing a bus bar of a metal sheet to an electrode terminal, when the battery cells are misaligned relatively to each other, an excessive stress acts on the bus bar and the electrode terminal, which causes a failure.

In the power supply device according to a second exemplary embodiment of the present invention, the elastic plate including the open cells includes a non-foam layer on a surface thereof.

In the power supply device according to a third exemplary embodiment of the present invention, a surface of the elastic plate including the open cells includes a foam layer from which cut cells are exposed.

In the power supply device according to a fourth exemplary embodiment of the present invention, the elastic plate includes a urethane foam.

In the power supply device according to a fifth exemplary embodiment of the present invention, the separator includes an elastic plate as a whole.

In the power supply device according to a sixth exemplary embodiment of the present invention, the separator includes a stacked structure of the elastic plate and a heat insulating layer.

In the power supply device according to a seventh exemplary embodiment of the present invention, the elastic plate includes a thickness between 0.2 mm and 7 mm, inclusive.

### (First exemplary embodiment)

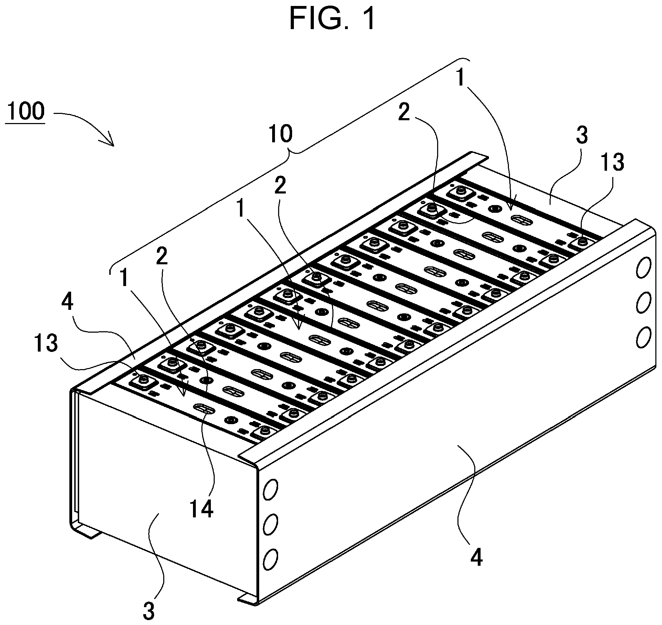

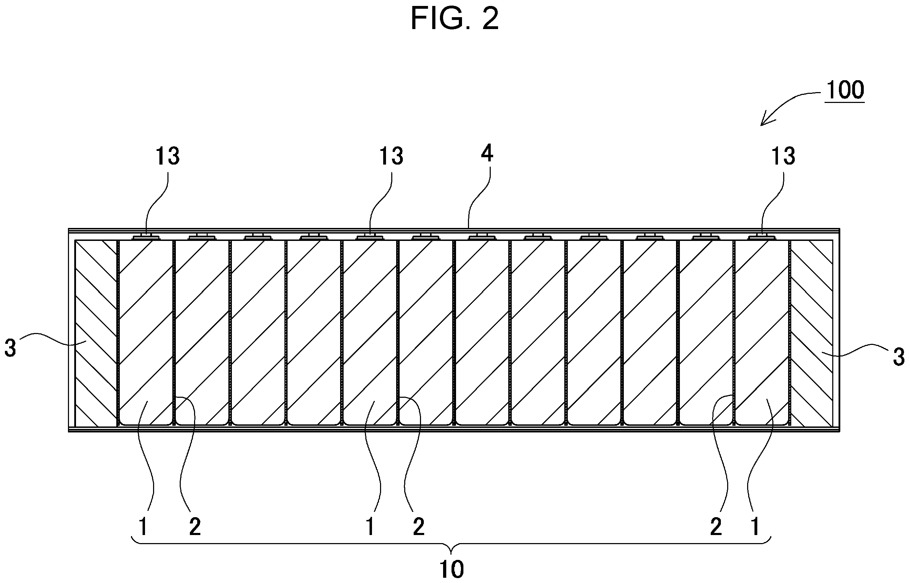

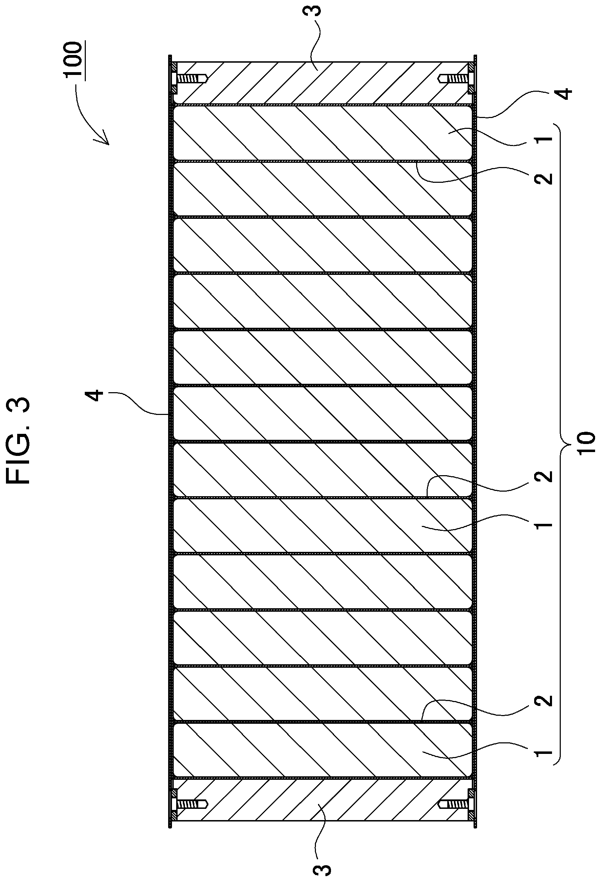

Power supply device 100 illustrated in a perspective view of Fig. 1, a vertical cross-sectional view of Fig. 2, and a horizontal cross-sectional view of Fig. 3 includes battery block 10 in which a plurality of battery cells 1 are stacked in a thickness with separator 2 interposed between battery cells 1, a pair of end plates 3 disposed on both end surfaces of battery block 10, and binding bar 4 that connects the pair of end plates 3 to fix battery block 10 in a pressurized state via end plates 3.

### (Battery block 10)

In battery block 10, a plurality of battery cells 1, which are prismatic battery cells having a quadrangular outer shape, are stacked in a thickness with separator 2 interposed therebetween. The plurality of battery cells 1 are stacked such that top surfaces thereof are flush with each other to constitute battery block 10.

### (Battery cell 1)

As illustrated in Fig. 1, in each of battery cells 1, a pair of positive and negative electrode terminals 13 are provided at both end parts of the top surface so as to protrude upward. Safety valve 14 is provided between electrode terminals 13. Safety valve 14 opens to release internal gas when an internal pressure of battery cell 1 rises to more than or equal to a predetermined value. Safety valve 14 prevents a rise in internal pressure of battery cell 1.

Battery cell 1 is a lithium ion secondary battery. Power supply device 100 provided with a lithium ion secondary battery serving as battery cell 1 has an advantage in that a charging capacity per volume and weight can be increased. However, battery cell 1 may be any other chargeable battery such as a non-aqueous electrolyte secondary battery other than the lithium ion secondary battery.

### (End plate 3, binding bar 4)

Each of end plates 3 is a metal sheet substantially coinciding in outer shape with battery cell 1 and is not deformed by being pressed by battery block 10, and binding bars 4 are connected to both side edges of end plate 3. End plates 3 connect stacked battery cells 1 in a pressurized state, and binding bars 4 fix battery block 10 in the pressurized state at a predetermined pressure.

### (Separator 2)

Separator 2 is sandwiched between stacked battery cells 1, absorbs expansion of battery cells 1 due to an increase in internal pressure, further insulates adjacent battery cells 1, and further interrupts heat conduction between the batteries. Battery block 10 includes bus bars (not illustrated) fixed to electrode terminals 13 of adjacent battery cells 1 to connect battery cells 1 in series or in parallel. Since a potential difference is generated between battery cases, the battery cells 1 connected in series are insulated by the separator 2 and stacked. Although battery cells 1 connected in parallel cause no potential difference to be generated between battery cases, battery cells 1 are stacked while being thermally insulated by separator 2 to prevent induction of thermal runaway.

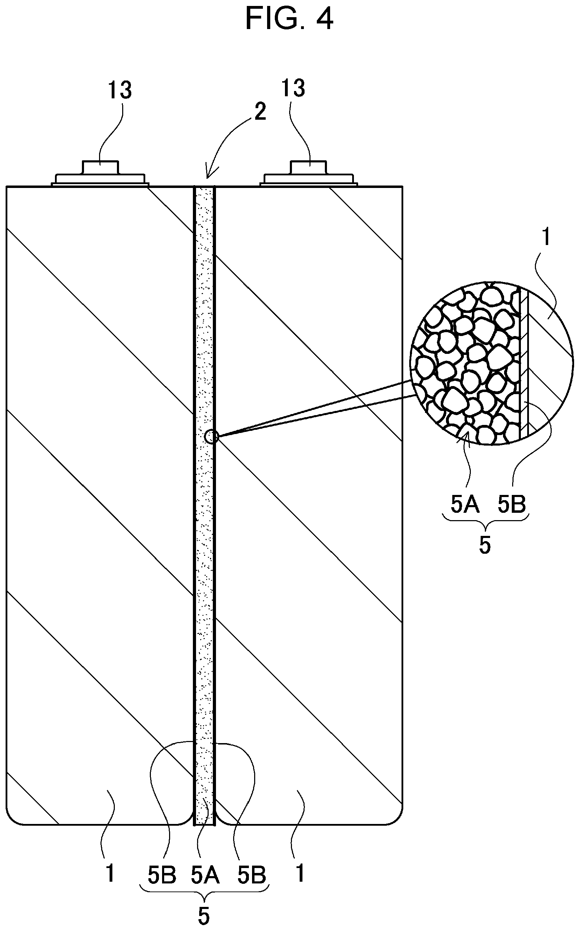

Separator 2 illustrated in a partially enlarged schematic cross-sectional view of Fig. 4 is elastic plate 5 that absorbs expansion of battery cells 1. Entire separator 2 in this drawing is elastic plate 5. Separator 2 can thicken elastic plate 5, and therefore can more effectively absorb expansion of battery cells 1. Note that, in Figs. 4 to 7 illustrated below, in order to make features of elastic plate 5 easy to understand, a thickness of separator 2 with respect to battery cell 1, a state of deformation of battery cell 1 at the time of expansion, a cross-sectional structure of elastic plate 5, and the like are exaggerated and illustrated.

Elastic plate 5 is a plate material that is elastically deformed by being pushed by expanding battery cells 1, and is an elastic material of plastic foam having open cells. The plastic foam having open cells has an extremely large deformation amount as compared with a non-foamed rubber-like elastic body or a closed-cell plastic foam, and can effectively absorb expansion of battery cells 1. This is because when the open cell foam is pressed by battery cells 1, air in the cells is pushed out through the continuous cells, so that the cells can be deformed to a state of being completely crushed. Separator 2 made of elastic plate 5 of open-cell plastic foam has an advantage that a deformation amount can be adjusted by porosity, and the porosity can be increased to increase the deformation amount.

On the other hand, in the separator made of the foam of the closed cells, the air in the cells is not pushed out even when the separator is pressed by the battery cells, the air pressure in the cells increases to prevent the deformation of the cells, and the pressure in the cells rapidly increases as the cells are crushed to be small to prevent the deformation of the cells. Therefore, the amount of deformation of the separator in the pressed state is reduced. Further, the closed-cell foam separator cannot increase the porosity and the deformation amount. This is because the deformation is prevented without the cells being crushed. It is difficult to further increase a deformation rate of the non-foamed rubber-like elastic body as compared with the closed-cell plastic foam. This is because a volume of a pressing part itself decreases, or the pressing part moves to another part and is deformed, so that the displacement amount in the pressed state is limited to a small amount.

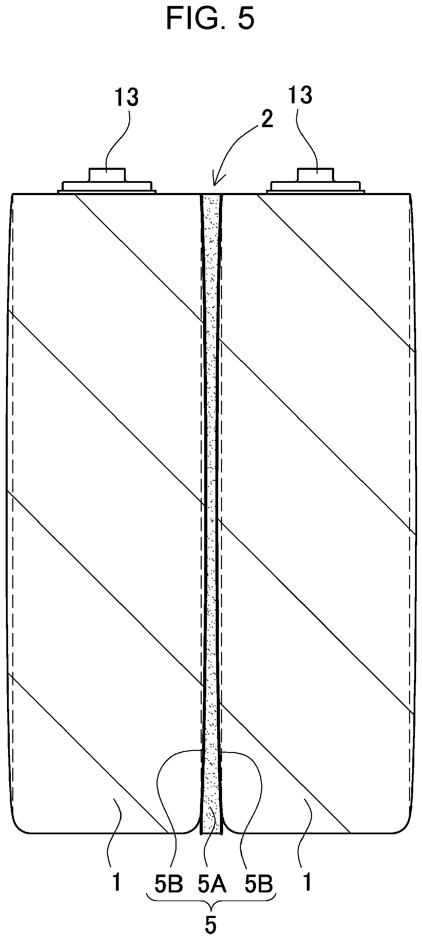

Separator 2 made of elastic plate 5 of plastic foam having open cells absorbs a large amount of displacement of expanding battery cells 1, and this physical property is particularly important in separator 2. This is because separator 2 having a large deformation amount in the pressed state is deformed following the expansion while forming a curved surface along the surface of battery cell 1 as illustrated in Fig. 5 during the expansion of battery cell 1, and a pressure distribution generated on the pressed surface is relaxed, so that local pressure increase on the surface of the battery cell can be suppressed. In separator 2 in which the pressure distribution on the surface of the battery cell cannot be sufficiently relaxed, a pressure difference in the battery cell increases, and the internal pressure locally increases. This state is particularly harmful in a lithium ion battery or the like that is frequently used in this type of power supply device. This is because in the lithium ion battery, lithium tends to be deposited on an electrode surface in a region where the internal pressure locally increases, and the safety is impaired.

In elastic plate 5 of separator 2 illustrated in the partially enlarged view of Fig. 4, non-foam layers 5B are provided on surfaces of a plastic foam having open cells. Non-foam layers 5B on the surfaces of separator 2 are in surface contact with the surfaces of battery cells 1 in a state of being sandwiched between battery cells 1. Separator 2 absorbs expansion of battery cells 1 by elastic deformation of foam layer 5A in a state where non-foam layers 5B are in close contact with the surfaces of battery cells 1. Therefore, as illustrated in Fig. 5, separator 2 can absorb the expansion of battery cells 1 by deformation of foam layer 5A into a shape that follows the expansion of battery cells 1 while each of non-foam layers 5B is deformed into a curved shape along the surface of each of battery cells 1 that expands.

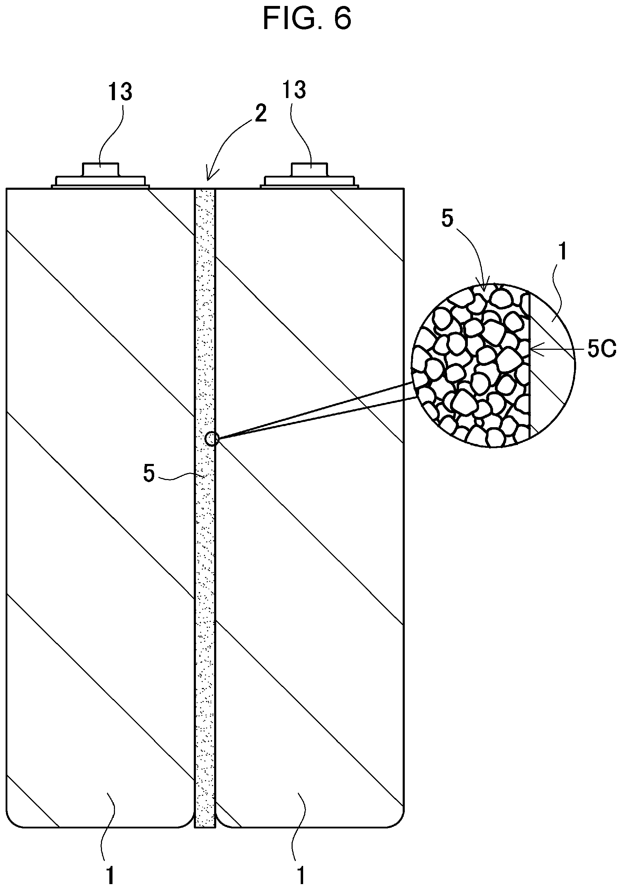

Elastic plate 5 of separator 2 illustrated in the partially enlarged schematic cross-sectional view of Fig. 6 has innumerable irregularities formed on a surface of plastic foam having open cells by continuous cells as foam layer 5C from which cut cells are exposed. In separator 2, an infinite number of continuous cells absorb dew condensation water adhering to the surfaces of battery cells 1, and electric leakage and a decrease in insulation resistance due to the dew condensation water can be suppressed. Since the power supply device is used in various temperature environments, dew condensation water may adhere to the surface due to a change in the temperature environment. The dew condensation water adhering to the surface of battery cell 1 flows down to the surface of an energization part to cause electric leakage or reduce the insulation resistance of the energization part. Separator 2 in which the open cells are exposed on the surface absorbs the dew condensation water to prevent adverse effects of the dew condensation water. Furthermore, separator 2 in which the open cells are exposed on the surface and elastically deformed to be brought into close contact with the surface of battery cell 1 can transfer the dew condensation water to be absorbed into separator 2, and therefore has an advantage that an amount of the dew condensation water to be absorbed can be increased to effectively prevent adverse effects caused by the dew condensation water.

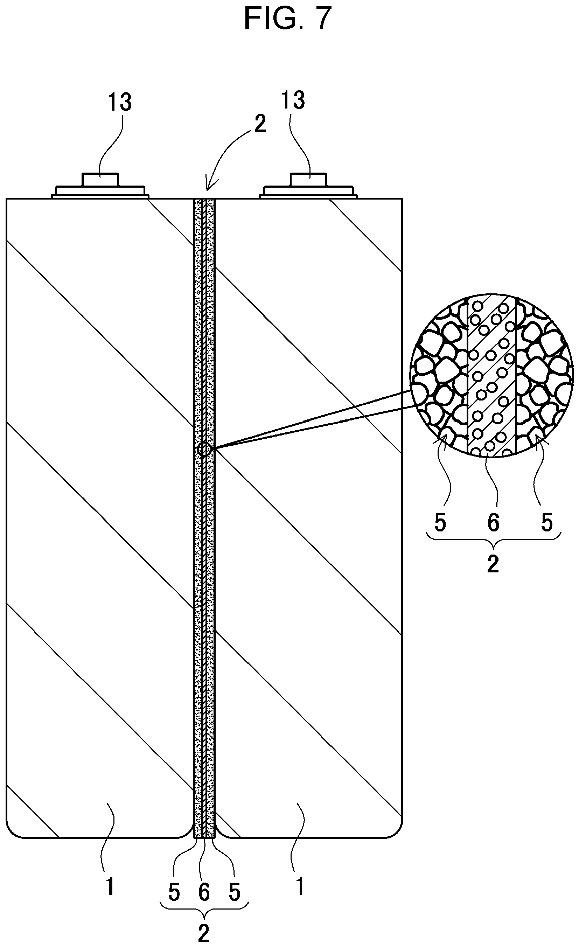

Entire separator 2 described above is elastic plate 5. However, as illustrated in the partially enlarged schematic cross-sectional view of Fig. 7, separator 2 may have a stacked structure of elastic plate 5 and heat insulating layer 6. Separator 2 has a stacked structure in which intermediate heat insulating layer 6 is sandwiched between elastic plates 5 stacked on both surfaces, and heat conduction between adjacent battery cells 1 can be reduced by heat insulating layer 6. As heat insulating layer 6, all layers having heat resistance characteristics superior to those of elastic plate 5, for example, a plastic foam having numerous fine closed cells can be used.

Elastic plate 5 of separator 2 is adjusted to have elasticity and a thickness that absorb expansion by being pressurized and deformed by expanding battery cells 1. The amount of deformation of elastic plate 5 due to expansion of battery cells 1 can be adjusted by the type and apparent density of plastic to be foamed, and the apparent density can be adjusted by a foaming rate. Elastic plate 5 of separator 2 has, for example, an apparent density in a range from 150 kg/m³ to 750 kg/m³ inclusive, preferably in a range from 200 kg/m³ to 500 kg/m³ inclusive, and a thickness in a range from 0.2 mm to 7 mm inclusive, preferably in a range from 1 mm to 5 mm inclusive. As the plastic foam of elastic plate 5, urethane foam is suitable. Separator 2 made of urethane foam has excellent temperature characteristics, and for example, can be compressed to 50% at 100°C over 22 hours to reduce a compression set to less than or equal to 20%.

Separator 2 formed of elastic plate 5 of urethane foam having an apparent density of 240 kg/m³ is restored by absorbing expansion of 1.5 mm of the battery cell with a thickness of 2 mm. Separator 2 is deformed to a state in which the entire thickness is crushed to 1/4 to absorb expansion of battery cells 1. Furthermore, separator 2 formed of elastic plate 5 of urethane foam having an apparent density of 320 kg/m³ can absorb expansion of 1.8 mm of the battery cell when the thickness is 3 mm, and can absorb expansion of 2.4 mm of the battery cell when the thickness is 4 mm. Elastic plate 5 made of urethane foam achieves the above characteristics at a temperature less than or equal to 80°C.

The power supply device described above can be used as a power source for a vehicle where electric power is supplied to a motor used for causing an electric vehicle to travel. As the electric vehicle on which the power supply device is mounted, an electric vehicle such as a hybrid automobile or a plug-in hybrid automobile that travels by both an engine and a motor, or an electric automobile that travels only by a motor can be used, and the power supply device is used as a power source for the vehicle. Note that, in order to obtain electric power for driving a vehicle, an example of constructing large-capacity and high-output power supply device 100 will be described below in which a large number of the above-described power supply devices are connected in series or in parallel, and a necessary controlling circuit is further added.

### (Power supply device for hybrid automobile)

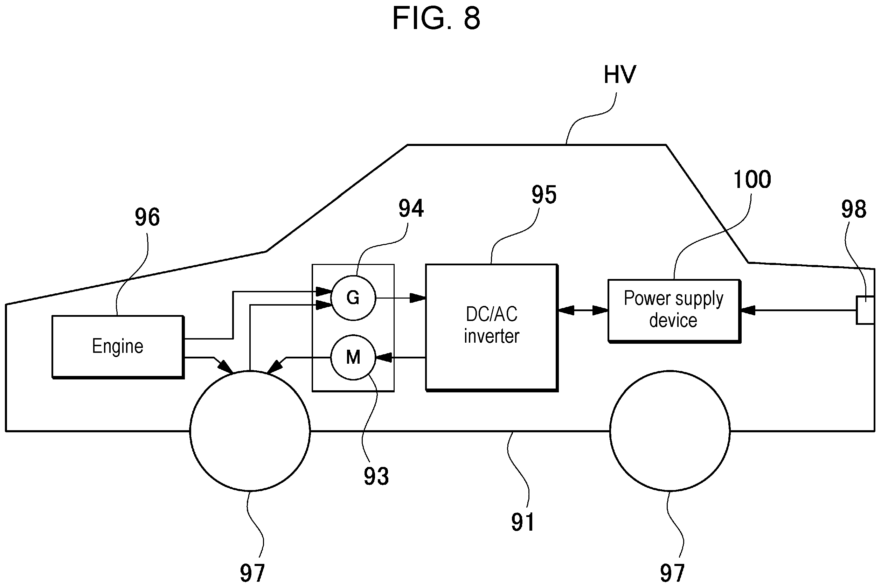

Fig. 8 illustrates an example in which a power supply device is mounted on a hybrid automobile that travels by both an engine and a motor. Vehicle HV illustrated in the drawing on which the power supply device is mounted includes: vehicle body 91; engine 96 and motor 93 for traveling that cause vehicle body 91 to travel; wheels 97 that are driven by engine 96 and motor 93 for traveling; power supply device 100 that supplies electric power to motor 93; and power generator 94 that charges a battery of power supply device 100. Power supply device 100 is connected to motor 93 and power generator 94 via DC/AC inverter 95. Vehicle HV travels by both motor 93 and engine 96 while charging and discharging the battery of power supply device 100. Motor 93 is driven in a region where engine efficiency is low, for example, during acceleration or low-speed traveling, and causes the vehicle to travel. Motor 93 is driven by electric power supplied from power supply device 100. Power generator 94 is driven by engine 96 or by regenerative braking when the vehicle is braked to charge the battery of power supply device 100. Note that, as illustrated in Fig. 8, vehicle HV may be provided with charging plug 98 for charging power supply device 100. Power supply device 100 can be charged by connecting charging plug 98 to an external power source.

### (Power supply device for electric automobile)

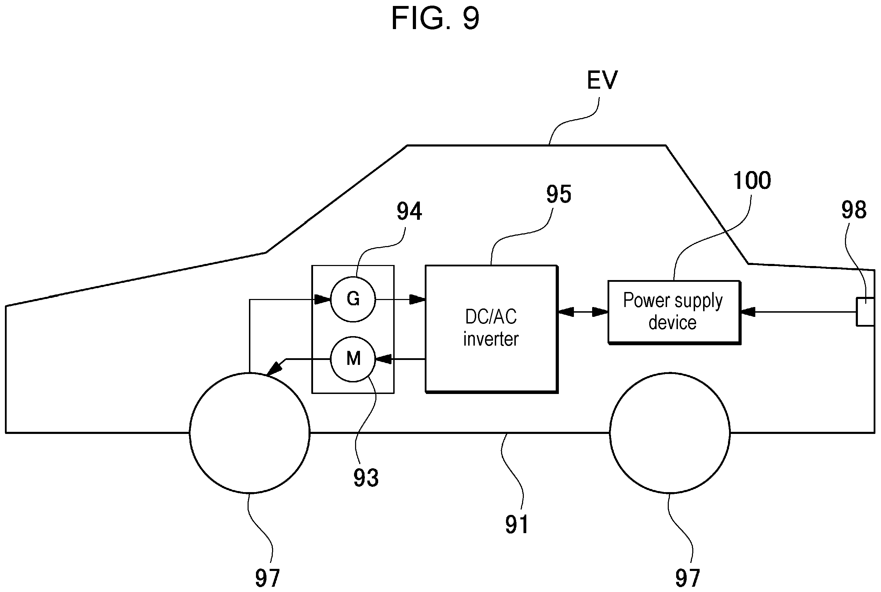

Further, Fig. 9 illustrates an example in which a power supply device is mounted on an electric automobile that travels only by a motor. Vehicle EV illustrated in the drawing on which the power supply device is mounted includes vehicle body 91, motor 93 for traveling that causes vehicle body 91 to travel, wheels 97 driven by motor 93, power supply device 100 that supplies electric power to motor 93, and power generator 94 that charges the battery of power supply device 100. Power supply device 100 is connected to motor 93 and power generator 94 via DC/AC inverter 95. Motor 93 is driven by electric power supplied from power supply device 100. Power generator 94 is driven by the energy at the time of applying regenerative braking to vehicle EV and charges the battery of power supply device 100. Further, vehicle EV includes charging plug 98, and power supply device 100 can be charged by connecting charging plug 98 to an external power source.

### (Power supply device for power storage device)

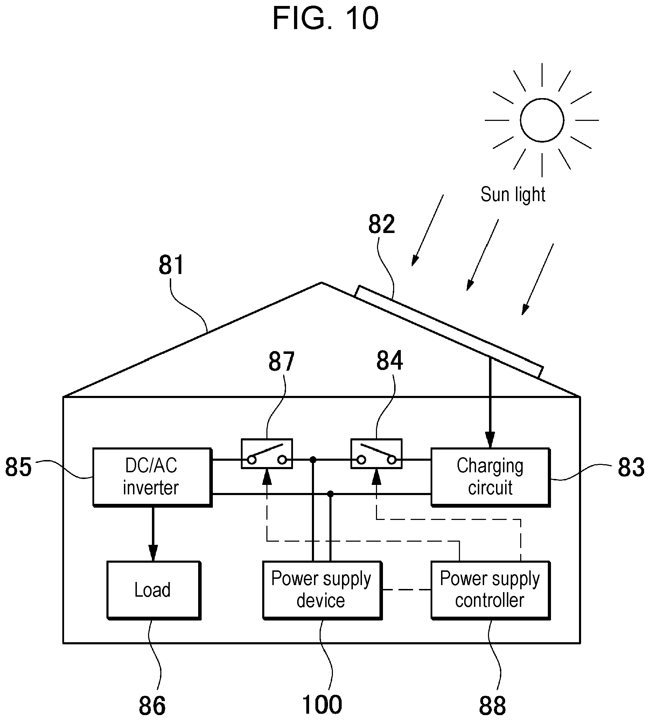

Furthermore, the application of the power supply device of the present invention is not limited to the power source for the motor that causes a vehicle to travel. The power supply device according to the exemplary embodiment can also be used as a power source for a power storage device that stores electricity by charging a battery with electric power generated by solar power generation, wind power generation, or the like. Fig. 10 illustrates a power storage device that charges and stores the battery of power supply device 100 with solar battery 82.

The power storage device illustrated in Fig. 10 charges the battery of power supply device 100 with electric power generated by solar battery 82 disposed on a roof, a rooftop, or the like of building 81 such as a house or a factory. The power storage device charges the battery of power supply device 100 via charging circuit 83 with solar battery 82 serving as a charging power source, and then supplies electric power to load 86 via DC/AC inverter 85. Therefore, the power storage device includes a charge mode and a discharge mode. In the power storage device illustrated in the figure, DC/AC inverter 85 is connected to power supply device 100 via discharging switch 87, and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. Further, when charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. Furthermore, it is also possible to simultaneously supply electric power to load 86 and charge power supply device 100 by turning on charging switch 84 and turning on discharging switch 87 as necessary.

Further, although not illustrated, the power supply device can also be used as a power source of a power storage device that performs power storage by charging a battery using midnight electric power at night. The power supply device that is charged with midnight electric power is charged with the midnight electric power that is surplus electric power generated by a power station, and outputs the electric power during the daytime when an electric power load increases, which can limit peak electric power during the daytime to a small value. Furthermore, the power supply device can also be used as a power source charged with both output of a solar battery and the midnight electric power. This power supply device can efficiently perform power storage using both electric power generated by the solar battery and the midnight electric power effectively in consideration of weather and electric power consumption.

The power storage system as described above can be suitably used for applications such as a backup power supply device that can be mounted on a rack of a computer server, a backup power supply device for a wireless base station such as a cellular phone, a power source for household or factory power storage, a power source for street lamps, and the like, a power storage apparatus combined with a solar battery, and a backup power source for traffic lights and traffic indicators for roads, traffic displays for roads.

### INDUSTRIAL APPLICABILITY

The power supply device according to the present invention is suitably used as a power source for a large current used for a power source of a motor for driving an electric vehicle such as a hybrid automobile, a fuel battery automobile, an electric automobile, or an electric motorcycle. Examples thereof include power supply devices for plug-in hybrid electric automobiles and hybrid electric automobiles capable of switching between an EV traveling mode and an HEV traveling mode, electric automobiles, and the like. Further, the present invention can be appropriately used for applications such as a backup power supply device that can be mounted on a rack of a computer server, a backup power supply device for a wireless base station such as a cellular phone, a power source for power storage for home and factory use, a power source for street lamps, and the like, a power storage apparatus combined with a solar battery, and a backup power source for traffic lights and the like.

### REFERENCE MARKS IN THE DRAWINGS

100: power supply device
1: battery cell
2: separator
3: end plate
4: binding bar
5: elastic plate
5A: foam layer
5B: non-foam layer
5C: foam layer from which cells are exposed
6: heat insulating layer
10: battery block
13: electrode terminal
14: safety valve
81: building
82: solar battery
83: charging circuit
84: charging switch
85: DC/AC INVERTER
86: load
87: discharging switch
88: power supply controller
91: vehicle body
93: motor
94: power generator
95: DC/AC INVERTER
96: engine
97: wheel
98: charging plug
HV, EV: vehicle

## Claims

1. A power supply device comprising:
a battery block including a plurality of battery cells and a separator, the plurality of battery cells being stacked in a thickness of the plurality of battery cells with the separator interposed between the plurality of battery cells;
a pair of end plates disposed on both end surfaces of the battery block; and
a binding bar connected to the pair of end plates and configured to fix the battery block in a pressurized state via the end plates,
wherein the separator includes an elastic plate made of a plastic foam including open cells on a surface of the separator or as a whole of the separator.

2. The power supply device according to Claim 1, wherein the elastic plate made of the plastic foam including the open cells includes a non-foam layer on a surface of the elastic plate.

3. The power supply device according to Claim 1, wherein a surface of the elastic plate made of the plastic foam including the open cells includes a foam layer from which cut cells are exposed.

4. The power supply device according to any one of Claims 1 to 3, wherein the elastic plate includes a urethane foam.

5. The power supply device according to any one of Claims 1 to 4, wherein the separator includes an elastic plate as a whole.

6. The power supply device according to any one of Claims 1 to 5, wherein the separator includes a stacked structure of the elastic plate and a heat insulating layer.

7. The power supply device according to any one of Claims 1 to 6, wherein the elastic plate includes a thickness between 0.2 mm and 7 mm inclusive.

8. An electric vehicle including the power supply device according to any one of Claims 1 to 7, the electric vehicle comprising:
the power supply device;
a motor for traveling to which electric power is supplied from the power supply device;
a vehicle body on which the power supply device and the motor are mounted; and
wheels driven by the motor to cause the vehicle body to travel.

9. A power storage device including the power supply device according to any one of Claims 1 to 7, the power storage device comprising:
the power supply device; and
a power supply controller that controls charging and discharging to the power supply device, wherein the power supply controller enables charging to the secondary battery cell by electric power from an outside, and performs control to charge the secondary battery cell.
